**Europäisches Patentamt**

**European Patent Office**

**Office européen des brevets**

(19)

(11) Veröffentlichungsnummer: **0 236 317 B1**

# (12) EUROPÄISCHE PATENTSCHRIFT

(45) Veröffentlichungstag der Patentschrift:
**18.01.89**

(21) Anmeldenummer: **85905331.6**

(22) Anmeldetag: **25.10.85**

(86) Internationale Anmeldenummer:
**PCT/EP 85/00562**

(87) Internationale Veröffentlichungsnummer:
**WO 86/02892 (22.05.86 Gazette 86/11)**

(51) Int. Cl.⁴: **B 62 D 11/10, F 16 H 57/02**

(54) **GETRIEBEANLAGE FÜR VOLLKETTENFAHRZEUG.**

(30) Priorität: **14.11.84 PC /EP84/003 59**

(43) Veröffentlichungstag der Anmeldung:
**16.09.87 Patentblatt 87/38**

(45) Bekanntmachung des Hinweises auf die Patenterteilung:
**18.01.89 Patentblatt 89/3**

(84) Benannte Vertragsstaaten:
**DE FR GB IT**

(56) Entgegenhaltungen:
**EP-A- 0 115 794**
**DE-A- 2 521 331**
**DE-A- 3 030 850**
**FR-A- 2 351 842**
**FR-A- 2 400 646**
**GB-A- 648 913**
**US-A- 2 971 398**
**US-A- 3 916 596**

(73) Patentinhaber: **ZAHNRADFABRIK FRIEDRICHSHAFEN AKTIENGESELLSCHAFT, Löwentaler Strasse 100 Postfach 2520, D-7990 Friedrichshafen 1 (DE)**

(72) Erfinder: **EICKHOFF, Hans-Jürgen, Hofrat-Moli-Strasse 50, D-7992 Tettnang (DE)**
Erfinder: **MAIER, Paul, Paulinenstrasse 82, D-7990 Friedrichshafen (DE)**
Erfinder: **BINGER, Bernhard, Untere Breite Strasse 5, D-7980 Ravensburg (DE)**
Erfinder: **ENGSTLER, Anton, Furtweg 12, D-7990 Friedrichshafen (DE)**
Erfinder: **GROLIG, Herbert, Panoramastrasse 15, D-7990 Friedrichshafen 5 (DE)**

## Beschreibung

Die Erfindung betrifft eine Getriebeanlage für Vollkettenfahrzeuge nach dem Oberbegriff von Anspruch 1.

Aus der DE-OS 29 20 820 ist eine solche Getriebeanlage bekannt, bei der vorrangig zur Verbesserung der Herstellung und Montage mehrere Baugruppen zu einer Getriebeanlage, teilweise auch bereits vorgefertigt, zusammengefügt sind. Dieser moderne Aufbau hat sich bewährt und führte zu erheblichen Verbesserungen bei solchen, relativ komplizierten Getriebeanlagen, in denen ja nicht nur die Übersetzung und Anpassung der Antriebsmaschine an den Kettenantrieb erfolgt, sondern auch noch je ein Wende- und Lenkgetriebe sowie ein Wandler und oft, wie in der o. g. Schrift zu ersehen, auch noch eine Strömungsbremse und ein Nebenabtrieb mit angeordnet sind.

Das Gehäuse einer solchen Getriebeanlage, in und an das die einzelnen Baugruppen montiert werden müssen, ist infolge der Befestigung der Baugruppen und deren trieblicher und druckmittelmässiger Verbindungen mit dem Gehäuse ein sehr kompliziertes Bauteil. Eine grosse Anzahl von Passflächen, Lagern und Verbindungen müssen mit einer hohen Präzision aufeinander abgestimmt gefertigt werden, so dass auch alle festen, trieblichen und Druckmittelverbindungen der Baugruppen mit dem Gehäuse eine einwandfreie Montage und die Funktion der gesamten Getriebeanlage gewährleisten. Dazu ist ein hoher Fertigungs- und Kontrollaufwand für die Baugruppen und besonders für das Gehäuse notwendig.

Es ist deshalb Aufgabe der Erfindung, eine Getriebeanlage nach dem Oberbegriff von Anspruch 1 weiterzuentwickeln und in bezug auf Fertigungs- und Montageaufwand zu vereinfachen.

Diese Aufgabe wird mit den kennzeichnenden Merkmalen vom Anspruch 1 erfüllt.

Während nach dem Stand der Technik bei einer solchen Getriebeanlage das komplizierteste und mit dem grössten Fertigungs- und Kontrollaufwand verbundene Teil das Gehäuse ist, wird nach der Erfindung bereits die Gussherstellung und vor allem aber die Fertigbearbeitung und der Kontrollaufwand gewaltig vereinfacht, weil die Anzahl der Bohrungen und Passflächen stark reduziert ist, und weil die Einhaltung und Kontrolle der notwendigen Toleranzen für einen sehr grossen Teil der bearbeiteten Flächen infolge ihrer geringeren Ausmasse weniger Schwierigkeiten verursacht. Der Wegfall jeglicher Lagerungen der Baugruppen im Gehäuse für die trieblichen Verbindungen und die flexiblen Verbindungen der hydraulischen, elektrischen und trieblichen Kuppelstellen zwischen den Baugruppen bringen grosse Vereinfachung für die Fertigung und die Montage.

Mit den Ansprüchen 2 bis 10 wird die Erfindung in vorteilhafter Weise weiter ausgestaltet.

Die Fixierung der Baugruppen innerhalb des trägerartigen Gehäuses über Lager-, Zentrier- und Befestigungselemente ermöglicht neben der Verkleinerung der zu bearbeitenden Flächen auch grosse Freiräume zur funktionsmässig optimalen Anordnung dieser Baugruppen. Die zentrisch zueinander angeordneten Lageraugen, Zentrier- und Befestigungsmittel sind im Prinzip gleich ausgeführt und nur die Lageraugen sind der jeweiligen Baugruppe und dem Getriebegehäuse angepasst. Werden die Lageraugen am Getriebegehäuse für zwei in Achsrichtung benachbart angeordnete Baugruppen in Umfangsrichtung versetzt angeordnet, ergeben sich günstige Freiräume für die Montage, und die Anordnung der Lageraugen kann im Prinzip auf kleinstem Durchmesser erfolgen, ohne dass dabei Einbauschwierigkeiten entstehen.

Sind die Lager-, Zentrier- und Befestigungselemente dann noch in Achsrichtung versetzt angeordnet, d. h., dass die Lageraugen sich nicht in einer axialen Ebene befinden, ergeben sich zusätzlich weitere Optimierungsmöglichkeiten in bezug auf den gesamten Bauraum, so dass das Getriebegehäuse kleiner gehalten werden kann und damit auch eine Reduzierung der zu bearbeitenden Flächen eintritt.

Da im Gehäuse nur Öffnungen und Durchgänge für Steckwellen, durch die die koaxial zueinander angeordneten Baugruppen verbunden werden, nötig sind, gibt sich ein wesentlich geringerer Fertigungsaufwand. Auch die achsversetzte Anordnung der Baugruppen zueinander und deren triebliche Verbindung über Zahnräder ist infolge der grossen freien Räume im Gehäuse leicht und funktions- und fertigungsgerecht zu verwirklichen, zumal der Zahneingriff an den Koppelstellen gleichzeitig mit den Lager-, Zentrier- und Befestigungselementen für die Baugruppen definiert wird.

Eine sehr einfache Montage der einzelnen Baugruppen in bezug auf die Druckmittelverbindung ist durch die Steckhülsen möglich, weil sich durch die steckerartigen Verbindungen nicht nur eine Vereinfachung der Montage ergibt, sondern auch ein Verwechseln der Anschlüsse, was bei flexiblen Kuppelleitungen geschehen kann, vermieden wird. Dabei ist jeweils eine Koppelstelle der Steckhülsen mit einem Haltemittel in jeweils einer Baugruppe so befestigt, dass bei einer Demontage die Steckhülse in dieser Baugruppe verbleibt, während sie sich aus der zugeordneten Baugruppe herausziehen lässt.

Die günstige und funktionsgerechte Gestaltung des Getriebegehäuses unter Einbeziehung des Druckbehälters ermöglicht kurze, steckerartige Verbindungen. Besonders günstig ist die Lage der Baugruppe Getriebesteuerung und deren mehrfache Koppelung mit der Baugruppe Schaltgetriebe über Steckhülsen, weil damit viele flexible Verbindungsleitungen, im Gehäuse fest montierte Rohrleitungen oder ölführende Bohrungen entfallen und damit die Fertigung und Montage stark vereinfacht wird. Auch können keine Verwechslungen der bisher bekannten flexiblen Leitungen vorkommen. In besonders vorteilhafter Weise ist die Übertragung des Druckmittels von z. B. dem Druckmittelbehälter auf eine der Baugruppen möglich, indem das Lager-, Zentrier- und Befestigungselement noch mit einer Einrichtung für die Druckmittelübertragung erweitert ist.

Weitere Einzelheiten der Erfindung werden anhand eines Ausführungsbeispiels und von Zeichnungen erläutert, wobei die Einzelheiten der Zeichnung Gegenstand der Erfindung sind.

Es zeigen

Fig. 1 das trägerartige Getriebegehäuse mit den im und an dem Getriebegehäuse angeordneten Baugruppen.

Fig. 2 ein kombiniertes Lager-, Zentrier- und Befestigungselement.

Fig. 3 eine Steckhülse und deren Befestigung.

Fig. 4 ein kombiniertes Lager-, Zentrier- und Befestigungselement verbunden mit der Druckmittelübertragung vom Druckbehälter zu einer Baugruppe.

Fig. 5 ein Beispiel für die Druckmittelübertragung mit Steckhülsen von der Baugruppe Getriebesteuerung zur Baugruppe Schaltgetriebe.

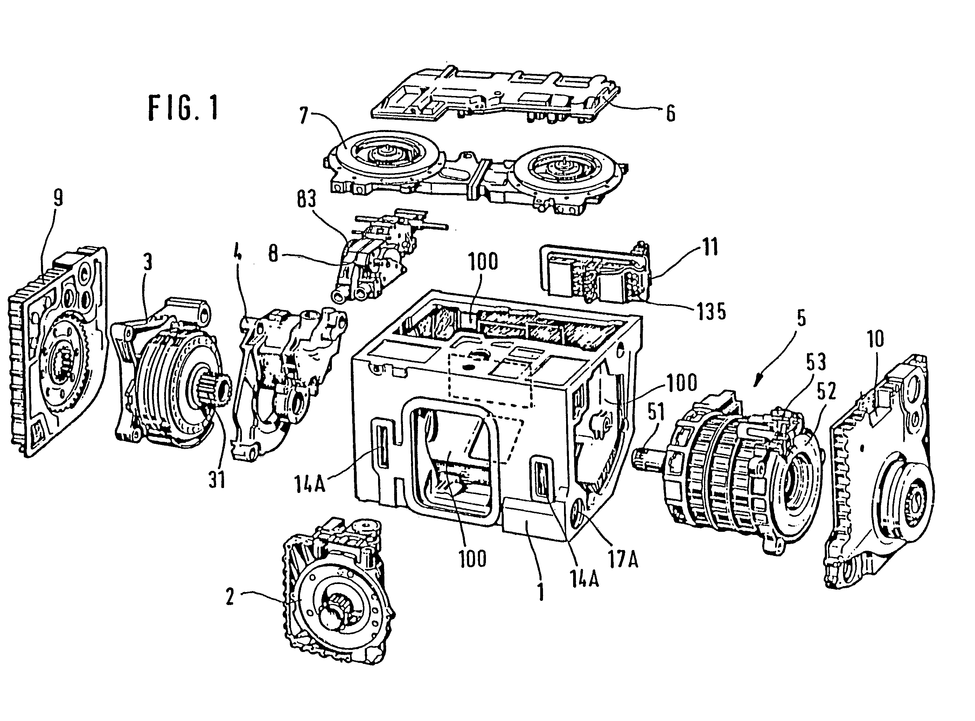

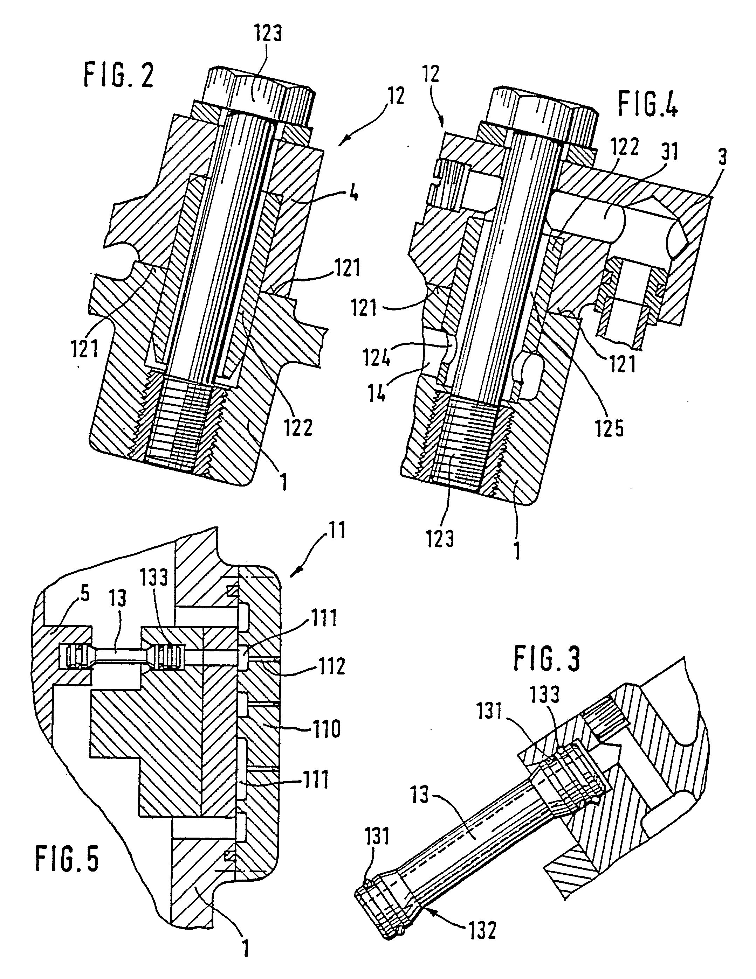

Die Fig. 1 zeigt das trägerartige Getriebegehäuse 1 mit den Öffnungen 100 zum Ein- und Anbau für die gleichfalls dargestellten und in der Nähe der jeweiligen Ein- und Anbauöffnung plazierten Baugruppen Antrieb 2, Drehmomentwandler mit Gehäuseeinsatz rechts 3, Gehäuseeinsatz Mitte 4, Schaltgetriebe mit Retarder und Retardersteuerung 5, Lenkgetriebe mit Steuerung 6, Lüfterantriebe 7, Pumpen 8, Seitendeckel mit Summierungsgetriebe rechts 9, Seitendeckel mit Summierungsgetriebe links 10, Getriebesteuerung 11.

Hinter den mit einem Deckel zu verschliessenden Öffnungen 14A des Getriebegehäuses 1 befindet sich der Druckbehälter 14, der sich der Form des Getriebegehäuses anpasst und Teile des Gehäuseinneren ausfüllt, das von den im Getriebegehäuse angeordneten Baugruppen nicht benötigt wird. Hinter der Öffnung 17A ist ein Filter 17 angeordnet.

Vorrangig die Baugruppen, die innerhalb des Getriebegehäuses 1 angeordnet sind, wie der Drehmomentwandler mit Gehäuseeinsatz rechts 3, der Gehäuseeinsatz Mitte 4, das Schaltgetriebe mit Retarder und Retardersteuerung 5 und die Pumpen 8 werden über Lager-, Zentrier- und Befestigungselemente 12 (Fig. 2), die aus den Lageraugen 121, dem Zentriermittel, Zentrierbüchse 122 und dem Befestigungsmittel, Schraube 123 bestehen, mit dem Getriebegehäuse 1 fest verbunden. Dabei sind für jede Baugruppe vorrangig drei Lager-, Zentrier- und Befestigungselemente 12 vorgesehen, die in einer axialen Ebene, aber auch axial versetzt, mit der einen Hälfte an der jeweiligen Baugruppe und mit der anderen Hälfte im Getriebegehäuse 1 angeordnet sind. Die Lager-, Zentrier- und Befestigungselemente 12 benachbarter Baugruppen können auch noch in Umfangsrichtung versetzt angeordnet sein, wobei die Zuordnung der Baugruppe zueinander allein durch die Funktion bestimmt wird. Weitere Baugruppen sind über geeignet geformte Flansche mit entsprechenden Passflächen des Getriebegehäuses 1 verbunden, so z. B. die Baugruppen Antrieb 2, Lenkgetriebe mit Steuerung 6, Lüfterantriebe 7, Seitendeckel mit Summiergetriebe rechts 9, Seitendeckel mit Summiergetriebe links 10, Getriebesteuerung 11.

Die triebliche Verbindung der Baugruppen untereinander erfolgt einmal bei koaxialer Anordnung über Steckwellen, z. B. 51 am Schaltgetriebe 5, die ausschliesslich in den Baugruppen gelagert sind und keine Verbindung mit dem Getriebegehäuse 1 haben.

Bei achsversetzter Anordnung erfolgt die triebliche Verbindung über den Zahneingriff benachbarter Baugruppen, z. B. Zahnrad 83, die zueinander über das trägerartige Getriebegehäuse 1 fixiert sind.

Die Druckmittelverbindungen erfolgen im Prinzip zwischen den Baugruppen direkt, wobei einige Baugruppen, z. B. die Pumpen 8, auch mit dem Druckbehälter 14, der im Getriebegehäuse 1 angeordnet und in diesem integriert ist, verbunden sind, da der Druckmittelbehälter die gesamte Druckmittelversorgung für die Getriebeanlage sicherstellt. Zwischen den Baugruppen sind Steckhülsen 13 angeordnet, so dass bei der Montage der Baugruppen gleichzeitig die Druckmittelverbindungen mit hergestellt sind.

Die direkte Übertragung des Druckmittels von der Baugruppe Getriebesteuerung auf die Baugruppe Schaltgetriebe 5 mit Retarder 52 und Retardersteuerung 53 erfolgt über mehrere, batterieartig nebeneinander angeordnete Steckhülsen 135, da zwischen diesen beiden Baugruppen mehrere Druckmittelverbindungen erforderlich sind.

Das kombinierte Lager-, Zentrier- und Befestigungselement 12 nach Fig. 2 verbindet z. B. die Baugruppe Getriebeeinsatz Mitte 4 mit dem Getriebegehäuse 1. Beide zu verbindenden Teile haben entsprechende Lageraugen 121, Zentriermittel 122 und Befestigungsmittel 123, wobei die Zentriermittel als Zentrierbuchse in entsprechenden Zentrierbohrungen der zu verbindenden Teile angeordnet sind. Eines der zu verbindenden Teile hat dabei ein direkt eingearbeitetes Gewinde oder trägt eine Gewindebüchse, in die z. B. eine Befestigungsschraube eingedreht ist.

Fig. 3 zeigt eine Steckhülse 13 für die Druckmittelverbindung von jeweils zwei Baugruppen, die so angeordnet ist, dass bei der Montage der Baugruppe die vorrangig mit einem O-Ring versehenen Kupplungen 132 der Steckhülse fixiert sind. Zur Befestigung der Steckhülse 13 in einer Baugruppe ist noch ein Haltemittel 133 angeordnet, um sicherzustellen, dass bei der Demontage die Steckhülse in einer der Baugruppen gehalten wird.

In das Lager-, Zentrier- und Befestigungselement 12 nach Fig. 4 ist noch die Druckmittelübertragung von z. B. dem Druckbehälter 14, der sich in einem Hohlraum des Getriebegehäuses 1 befindet, zu der Baugruppe Gehäuseeinsatz Mitte 4 angeordnet. Der Druckbehälter 14 ist dabei über eine Querbohrung 124 in der Zentrierbüchse 122 und einen Ringraum 125 mit einem Druckmittelkanal 31 mit dem Gehäuseeinsatz Mitte 4 verbunden.

Fig. 5 zeigt, wie im Deckel 110 der Getriebesteuerung 11 Druckmittelkanäle 111 angeordnet sind, über die die verschiedensten Ventile der Getriebesteuerung mit der Baugruppe Schaltgetriebe 5 über Steckhülsen 13 verbunden sind. Die Haltemittel 133 sind dabei zwischen der Steckhülse 13 und der Getriebesteuerung 11 angeordnet, damit beim Demontieren der Getriebesteuerung — Abziehen des Steuerungsdeckels 110 — die Steckhülsen in der Baugruppe Getriebesteuerung verbleiben und die Baugruppe Schaltgetriebe 5 bei einem notwendigen Ausbau durch die engen, stirnseitigen Öffnungen des Getriebegehäuses 1 möglich ist und eine Behinderung durch die Steckhülsen 13 nicht erfolgt und die Steckhülsen vor allem auch nicht in das Innere des Getriebegehäuses 1 fallen können. In einfacher und zweckmässiger Weise sind noch Kontrollbohrungen 112 an die Druckmittelkanäle 111 geführt, an die jeweils bei Funktionsüberprüfungen Kontrolleinrichtungen angeschlossen werden können.

*Bezugszeichen*

1 Getriebegehäuse
100 Öffnungen
2 Baugruppe Antrieb
3 Baugruppe Drehmomentwandler mit Gehäuseeinsatz rechts
31 Steckwelle
4 Baugruppe Gehäuseeinsatz Mitte
5 Baugruppe Schaltgetriebe mit Retarder und Retardersteuerung
51 Steckwelle
52 Retarder
53 Retardersteuerung
6 Baugruppe Lenkgetriebe
7 Baugruppe Lüfterantriebe
8 Baugruppe Pumpen
83 Zahnrad
9 Baugruppe Seitendeckel mit Summierungsgetriebe rechts
10 Baugruppe Seitendeckel mit Summierungsgetriebe links
11 Baugruppe Getriebesteuerung
110 Deckel
111 Druckmittelkanal
112 Kontrollbohrung
12 Lager-, Zentrier- und Befestigungselement
121 Lagerauge
122 Zentriermittel (Zentrierbüchse)
123 Befestigungsmittel (Schraube)
124 Querbohrung
125 Ringraum
13 Steckhülse
131 Dichtmittel (O-Ring)
132 Kupplung
133 Haltemittel (Haltering)
135 Steckhülsenbatterie
14 Druckbehälter
14A Öffnung für den Druckbehälter
17 Filter
17A Öffnung für den Filter

## Patentansprüche

1. Getriebeanlage für Vollkettenfahrzeuge mit quer zur Längsachse angeordnetem Schalt- (5) und Lenkgetriebe (6) mit Baugruppen (2-11), die über eigene Lagergehäuse im oder am Getriebegehäuse (1) zentriert und lösbar befestigt sind, und mit anderen Baugruppen (2-11) unmittelbar nur über funktionelle Verbindungen (13, 31, 51) verbunden sind, dadurch gekennzeichnet, dass an den Lagergehäusen der im Getriebegehäuse (1) angeordneten Baugruppen (3, 4, 5, 8) Lageraugen (121) angeordnet sind, die mit Lageraugen (121) vom Getriebegehäuse (1) zusammenwirken und mit Befestigungsmitteln (123) als Lager-, Zentrier- und Befestigungselemente (12) am Umfang verteilt und zu Lager-, Zentrier- und Befestigungselementen (12) benachbarter Baugruppen versetzt angeordnet sind.

2. Getriebeanlage für Vollkettenfahrzeuge nach Anspruch 1, dadurch gekennzeichnet, dass die vorrangig drei Lager-, Zentrier- und Befestigungselemente (12) für jeweils eine Baugruppe (3, 4, 5, 8) in einer axialen Ebene oder auch axial versetzt angeordnet sind.

3. Getriebeanlage für Vollkettenfahrzeuge nach Anspruch 2, dadurch gekennzeichnet, dass die Lager-, Zentrier- und Befestigungselemente (12) aus zentrisch zueinander angeordneten Lageraugen (121), Zentriermitteln (122) und Befestigungsmitteln (123) bestehen.

4. Getriebeanlage nach Anspruch 1, dadurch gekennzeichnet, dass die koaxialen trieblichen Verbindungen zwischen den Baugruppen (3, 4, 5, 9, 10) über Steckwellen (31, 51) erfolgen.

5. Getriebeanlage nach Anspruch 1, dadurch gekennzeichnet, dass die axial versetzten trieblichen Verbindungen über Zahnräder (83) mit Zahneingriff erfolgen, deren Definierung durch die Positionierung der Baugruppen (3, 8) am Gehäuse (1) erzielt wird.

6. Getriebeanlage nach Anspruch 1, dadurch gekennzeichnet, dass die Druckmittelverbindungen zwischen den Baugruppen über mit Dichtmitteln (O-Ring 131) versehenen Steckhülsen (13) erfolgt, die bei der Demontage durch Haltemittel (Haltering 133) gehalten werden.

7. Getriebeanlage nach Anspruch 1, dadurch gekennzeichnet, dass der Druckbehälter (14) für das Druckmittel ein Teil des Gehäuses (1) ist und die notwendigen Anschlüsse der Baugruppe über Steckhülsen (13) erfolgen.

8. Getriebeanlage nach Anspruch 1, dadurch gekennzeichnet, dass die Druckmittelanschlüsse der Baugruppen an den Druckbehälter (14) über die Lager-, Zentrier- und Befestigungselemente (12) erfolgen, wobei die Übertragung des Druckmittels über den Ringraum, der sich zwischen Zentriermittel (Zentrierbüchse 122) und Befestigungsmittel (Schraube 123) ergibt, erfolgt.

9. Getriebeanlage nach Anspruch 1, dadurch gekennzeichnet, dass die Verteilung des Druckmittels innerhalb einer Baugruppe (11) über Druckmittelkanäle (111), die im Deckel (110) angeordnet sind, erfolgt.

10. Getriebeanlage nach Anspruch 1, dadurch gekennzeichnet, dass ein Filter für das Druckmittel ein Teil des Gehäuses und im Druckmittelbehälter (14) angeordnet ist.

## Claims

1. Gear system for full-track vehicles, comprising a change speed gear (5) and a steering gear (6), which are arranged at a right angle to the longitudinal axis and comprise sub-assemblies (2-11), which are centred in or at and secured in a detachable manner to the gear case (1) via separate bearing housings and are only directly connected to other sub-assemblies via functional connections (13, 31, 51), characterised in that bearing eyes (121) are arranged at the bearing housings of the sub-assemblies (3, 4, 5, 8) arranged in the gear case (1), cooperate with bearing eyes (121) of the gear case (1), are distributed at the circumference with fastening means (123) as bearing-centering and fastening elements (12) and arranged in a staggered manner with respect to bearing-centering and fastening elements (12) of adjacent sub-assemblies.

2. Gear system for full-track vehicles according to claim 1, characterised in that the three most important bearing-centering and fastening elements (12) for each respective sub-assembly (3, 4, 5, 8) are arranged in an axial plane or also staggered in the axial direction.

3. Gear system for full-track vehicles according to claim 2, characterised in that the bearing-centering and fastening elements (12) consist of bearing eyes (121), centering means (122) and fastening means (123) which are arranged concentrically with one another.

4. Gear system according to claim 1, characterised in that the coaxial drive connections between the sub-assemblies (3, 4, 5, 9, 10) are effected by plug-in shafts (31, 51).

5. Gear system according to claim 1, characterised in that the axially staggered drive connections are effected by gear wheels (83) whose mesh is defined in accordance with the positioning of the sub-assemblies (3, 8) at the case (1).

6. Gear system according to claim 1, characterised in that the pressure medium connections between the sub-assemblies are effected by plug-in sleeves (13) which are provided with sealing means (O-ring 131) and which are retained by retaining means (retaining ring 133) during disassembly.

7. Gear system according to claim 1, characterised in that the pressure vessel (14) for the pressure medium is a part of the case (1) and the necessary connections of the sub-assembly are effected by plug-in sleeves (13).

8. Gear system according to claim 1, characterised in that the pressure medium connections between the sub-assemblies and the pressure vessel (14) are effected by the bearing, centering and fastening elements (12), the pressure medium being transferred via the annular chamber produced between centering means (centering bushing 122) and fastening means (screw 123).

9. Gear system according to claim 1, characterised in that the pressure medium is distributed within a sub-assembly (11) via pressure medium conduits (111) arranged in the cover (110).

10. Gear system according to claim 1, characterised in that a filter for the pressure medium is a part of the case and is arranged in the pressure medium vessel (14).

## Revendications

1. Transmission pour véhicules à chenilles, comportant des boîtes de vitesses (5) et de direction (6) disposées transversalement par rapport à l'axe horizontal, et comprenant des ensembles (2 à 11) qui sont fixés dans ou sur le carter (1) de la transmission par leurs propres boîtes de paliers, de manière centrée et amovible, et d'autres ensembles (2 à 11) qui ne sont fixés directement que par des organes de liaison fonctionnelle (13, 31, 51), caractérisée en ce que les boîtes de paliers des ensembles (3, 4, 5, 8) fixés dans le carter (1) comportent des bossages d'appui (121) qui coopèrent avec des bossages d'appui (121) prévus sur le carter (1), qui sont répartis sur le pourtour pour former des éléments (12) de centrage et de fixation des paliers avec des moyens de fixation (123), et qui sont décalés par rapport à des éléments (12) de centrage et de fixation des paliers d'ensembles voisins.

2. Transmission selon la revendication 1, caractérisée en ce que les éléments (12) de centrage et de fixation des paliers d'un ensemble (3, 4, 5, 8) sont disposés dans un plan axial ou sont aussi décalés axialement, ces éléments étant de préférence au nombre de trois.

3. Transmission selon la revendication 2, caractérisée en ce que les éléments (12) de centrage et de fixation des paliers comprennent des bossages d'appui (121), des moyens de centrage (122) et des moyens de fixation (123) qui sont disposés de manière centrée les uns par rapport aux autres.

4. Transmission selon la revendication 1, caractérisée en ce que les liaisons motrices coaxiales entre les ensembles (3, 4, 5, 9, 10) se font au moyen d'arbres à emboîtement (31, 51).

5. Transmission selon la revendication 1, caractérisée en ce que les liaisons motrices décalées axialement se font au moyen de pignons (83) dont l'engrènement est déterminé par le positionnement des ensembles (3, 8) sur le carter (1).

6. Transmission selon la revendication 1, caractérisée en ce que les liaisons de fluide sous pression entre les ensembles se font au moyen de douilles à emboîtement (13) pourvues de moyens d'étanchéité (joint torique 131), ces douilles étant maintenues par des moyens de retenue (bague 133) lors du démontage.

7. Transmission selon la revendication 1, caractérisée en ce que le réservoir sous pression (14) pour le fluide sous pression est constitué par une partie du carter (1), et en ce que les liaisons de fluide sous pression nécessaires pour un ensemble se font au moyen de douilles à emboîtement (13).

8. Transmission selon la revendication 1, caractérisée en ce que les liaisons de fluide sous pression entre les ensembles et le réservoir sous pression (14) se font à travers les éléments (12) de centrage et de fixation des paliers, le fluide sous pression passant dans l'espace annulaire ménagé entre des moyens de centrage (douille de centrage 122) et des moyens de fixation (vis 123).

9. Transmission selon la revendication 1, caractérisée en ce que la distribution du fluide sous pression à l'intérieur d'un ensemble (11) se fait au moyen de canaux (111) qui sont ménagés dans le couvercle (110).

10. Transmission selon la revendication 1, caractérisée en ce qu'un filtre pour le fluide sous pression forme un élément du carter et se trouve dans le réservoir (14) de fluide sous pression.

FIG. 1

FIG. 2

FIG.4

FIG.3

FIG.5